# EUROPÄISCHE PATENTSCHRIFT

(11) **EP 0 721 389 B1**
(45) Veröffentlichungstag und Bekanntmachung des Hinweises auf die Patenterteilung: **04.06.1997**
(21) Anmeldenummer: 94928369.1
(22) Anmeldetag: 16.09.1994
(51) Int. Cl.: B23C 3/18

(54) **VERFAHREN ZUM FRÄSEN EINES ENTLANG EINER HAUPTACHSE GESTRECKTEN TURBINENSCHAUFELPROFILS**
PROCESS FOR MILLING A TURBINE BLADE SECTION EXTENDING ALONG A MAIN AXIS
PROCEDE DE FRAISAGE DU PROFIL D'UNE AUBE DE TURBINE QUI S'ETEND LE LONG D'UN AXE PRINCIPAL

(30) Priorität: 29.09.1993 EP 93115743
(43) Veröffentlichungstag der Anmeldung: 17.07.1996
(73) Patentinhaber: SIEMENS AKTIENGESELLSCHAFT, 80333 München (DE)
(72) Erfinder: DAVID, Rolf, D-45452 Mülheim (DE); KINZEL, Berthold, D-45472 Mülheim (DE)
(86) Internationale Anmeldenummer: EP9403112
(87) Internationale Veröffentlichungsnummer: WO9509062

(56) Entgegenhaltungen:
- CH-A- 661 678
- DE-A- 2 352 539
- DE-A- 2 544 612
- GB-A- 1 493 236
- US-A- 2 726 578

## Beschreibung

Die Erfindung betrifft ein Verfahren zum Fräsen eines entlang einer Hauptachse gestreckten Turbinenschaufelprofils mit einer konvexen Saugseite und einer konkaven Druckseite aus einem Werkstück, wobei die Saugseite mittels eines um eine zugehörige Drehachse rotierenden zugehörigen Fräsers gefräst wird, welcher Fräser eine kreisringförmige, ebene Stirnfläche hat, die definiert ist durch eine rotierende Anordnung mit zumindest einer Schneidkante, wobei der Fräser und das Werkstück etwa senkrecht zur Hauptachse gegeneinander bewegt werden.

Die Erfindung betrifft außerdem ein Verfahren zum Fräsen eines entlang einer Hauptachse gestreckten Turbinenschaufelprofils mit einer konvexen Saugseite und einer konkaven Druckseite aus einem Werkstück, bei dem die Druckseite gefräst wird mittels eines zugehörigen Fräsers, der um eine zugehörige Drehachse rotiert.

Solche Verfahren gehen hervor aus der DE 25 44 612 A1.

Die Erfindung bezieht sich damit insbesondere auf das Fräsen von Turbinenschaufelprofilen für sogenannte Trommelschaufeln, die Turbinenschaufelprofile aufweisen, welche entlang einer Hauptachse unveränderlich und außerdem nicht verwunden sind, und welche vielfach in Dampfturbinen Einsatz finden. Außer den eigentlichen Turbinenschaufelprofilen haben solche Trommelschaufeln üblicherweise Fußteile, an denen sie zu befestigen sind, und Kopfteile, die gewisse Dichtungsfunktionen sowie Dämpfungsfunktionen erfüllen. Trommelschaufeln sind in vielfältigen Ausgestaltungen bekannt. Hergestellt werden Trommelschaufeln vielfach durch Fräsen aus einfach geformten Werkstücken, sogenannten Rohlingen. Ein Rohling hat dabei eine einfache Gestalt und wird beispielsweise aus einem großen Barren ausgesägt; er ist üblicherweise ein Prisma, das entlang der Hauptachse der herzustellenden Trommelschaufel gerade ist und senkrecht zu der Hauptachse einen rechteckigen oder parallelogrammförmigen Querschnitt hat.

Eine Verallgemeinerung des entlang einer Achse geraden, d.h. insbesondere unverwundenen, Turbinenschaufelprofils für eine Trommelschaufel geht hervor aus den Dokumenten GB-PS 625 771, GB-PS 635 775 und GB-PS 703 796. Ein darin spezifiziertes verallgemeinertes Turbinenschaufelprofil ist dadurch ausgezeichnet, daß es gegeben ist durch eine Schar gerader Linien, die in ihrer Gesamtheit die dem Turbinenschaufelprofil entsprechende Fläche bilden. Ein entlang einer Achse gerades Turbinenschaufelprofil, wie es in einer Trommelschaufel vorkommt, ist ein einfaches Beispiel für ein derartiges verallgemeinertes Turbinenschaufelprofil, wobei die geraden Linien, die das gerade Turbinenschaufelprofil bilden, sämtlich parallel zur Achse sind. Hinzu kommen aber auch kompliziertere Profile, insbesondere Profile mit in Ebenen senkrecht zur Achse liegenden Querschnitten, die sich entlang der Achse linear verändern, und auch verwundene Profile. Die Entstehung solcher verwundenen Profile ergibt sich aus folgendem einfachen Modell: Ein entlang einer Achse gerades oder sich linear veränderndes, unverwundenes Profil werde dargestellt mit einem Bündel von Stäbchen, wie sie zu dem bekannten Spiel "Mikado" verwendet werden. Dieses Bündel, das an einer ersten Seite auf einer Unterlage abgestellt und an einer zweiten Seite von einer Handfläche der modellierenden Person auf die Unterlage gedrückt sei, kann durch Verdrehen und/oder Verschieben der Handfläche auf vielerlei Art verformt und verdreht werden, ohne daß einzelne Stäbchen verbogen werden und wobei die Gesamtheit der Stäbchen immer noch eine einheitliche und, bei hinreichend großer Anzahl von Stäbchen, geschlossen erscheinende Fläche bilden. Jede der auf diese Weise erzeugbaren Flächen ist ein Beispiel für eine Fläche, die aus einer Schar gerader Linien oder, wie es in den erwähnten Dokumenten ausgedrückt ist, koinzidenter Linien besteht. Es sei bemerkt, daß praktisch jedes Turbinenschaufelprofil lokal, d.h. jeweils in einer hinreichend kleinen Umgebung jedes Punktes, approximierbar ist mit einer Fläche, die aus einer Schar gerader Linien besteht und insbesondere eben ist. Zu Turbinenschaufelprofilen oder Teilen von Turbinenschaufelprofilen, die jeweils aus einer Schar gerader Linien gebildet und entlang einer Achse gestreckt sind, kann generell festgestellt werden, daß die Linien jeweils in spitzem Winkel zu der Achse ausgerichtet sind; dies begründet sich nicht zuletzt daraus, wie solche Turbinenschaufelprofile aus geraden Turbinenschaufelprofilen entstehen und auch daraus, daß die Turbinenschaufelprofile in Querschnitten etwa senkrecht zu der Achse stets deutlicher als in Längsschnitten parallel zur Achse gekrümmt sein müssen.

Ein Verfahren zum Fräsen eines entlang einer Hauptachse gestreckten Turbinenschaufelprofils mit einer konvexen Saugseite und einer konkaven Druckseite geht aus der Patentschrift DE 25 44 612 C3 hervor. Danach wird das Turbinenschaufelprofil gefräst, indem ein Fräser rund oder schraubenförmig um die Hauptachse herum um das Werkstück geführt wird und mit einer Stirnfläche, die definiert ist durch eine rotierende Anordnung von Schneidkanten, welche an jedem Punkt der Oberfläche des herzustellenden Turbinenschaufelprofils jeweils einen spitzen Winkel mit einer bezüglich des Turbinenschaufelprofils tangentialen Ebene bildet. Dabei werden die Druckseite und die Saugseite mit einem einzigen Fräser hergestellt. Bedingt durch die räumliche Orientierung des Fräsers bezüglich des herzustellenden Turbinenschaufelprofils ergibt sich auf dem gefrästen Werkstück eine Oberfläche, die eine Rillenstruktur aufweist und zum Erhalt des Turbinenschaufelprofils daher aufwendiger Bearbeitung bedarf. Daher wird der angegebene Vorteil des Verfahrens, bei dem lediglich ein einziger Fräser zur Herstellung des Turbinenschaufelprofils nötig sein soll, in erheblichem Maße relativiert, da zumindest eine weitere formgebende spanende Bearbeitung des gefrästen Werkstucks erforderlich ist.

Ein allgemeiner Überblick über die bekannten Verfahren zum Fräsen sowie hierfür geeignete Werkzeugmaschinen, freilich ohne jeden Hinweis auf das Fräsen von Turbinenschaufelprofilen mit den dabei maßgeblichen speziellen Problemen, geht hervor aus dem "Handbuch der Fertigungstechnik", herausgegeben von G. Spur und T. Stöferle, Carl Hanser Verlag, München und Wien, 1979, Band 3/1, Kapitel 7. Aus dem Abschnitt 7.2.1, Seite 437, nebst bildlichen Darstellungen auf Seite 438, geht ein Verfahren zum Fräsen einer kreiszylindrischen Fläche hervor, mit dem die gewünschte Fläche unmittelbar, insbesondere ohne makroskopische Rillenstruktur, erhalten wird. Das erwähnte Kapitel enthält auch Übersichten über den grundsätzlichen Aufbau eines Fräsers, siehe hierzu insbesondere Abschnitt 7.6, Seite 463 ff., sowie Hinweise zum grundsätzlichen Aufbau von Fräsmaschinen.

In Ansehung der Nachteile, die den bekannten Verfahren zum Herstellen eines Turbinenschaufelprofils mit einer konvexen Saugseite und einer konkaven Druckseite durch Fräsen anhaften, ist es die Aufgabe der Erfindung, entsprechende Verfahren anzugeben, welche zumindest die Druckseite oder die Saugseite der Turbinenschaufel mit einer Oberfläche liefern, die zumindest keiner weiteren formgebenden Bearbeitung mehr bedarf.

Im Hinblick auf die Herstellung der Saugseite wird zur Lösung dieser Aufgabe ein Verfahren zum Fräsen eines entlang einer Hauptachse gestreckten Turbinenschaufelprofils mit einer konvexen Saugseite und einer konkaven Druckseite aus einem Werkstück angegeben, wobei die Saugseite mittels eines um eine zugehörige Drehachse rotierenden zugehörigen Fräsers gefräst wird, welcher Fräser eine kreisringförmige, ebene Stirnfläche hat, die definiert ist durch eine rotierende Anordnung mit zumindest einer Schneidkante, wobei der Fräser und das Werkstück etwa senkrecht zur Hauptachse gegeneinander bewegt werden, und wobei die Schneidkante in der Stirnfläche liegt sowie die Stirnfläche tangential zu der zu fräsenden Saugseite ausgerichtet ist und die Saugseite an einer in spitzem Winkel zu der Hauptachse ausgerichteten Kontaktlinie berührt.

Dementsprechend wird in Abkehr von dem aus der obengenannten Patentschrift hervorgehenden Verfahren der eine in der Stirnfläche liegende Schneidkante habende Fräser so ausgerichtet, daß seine Stirnfläche auf der Kontaktlinie etwa tangential zu der Saugseite ausgerichtet ist. Damit erfolgt das Fräsen nicht mehr überwiegend mit der Stirnfläche, sondern mit Seitenflächen des Fräsers; allerdings wird erreicht, daß die Fräsbahn, die der Fräser auf dem Werkstück bildet, einen in der Tat glatten Bereich aufweist. Das Entstehen einer Rillenstruktur, wie sie bei den bisherigen Verfahren unvermeidlich war, wird somit vermieden und im wesentlichen unmittelbar die gewünschte Oberfläche an der Saugseite erhalten. Nachbearbeitungen, sofern sie überhaupt erforderlich sind, können auf Maßnahmen zum Glätten der Oberfläche durch Schleifen oder Läppen beschränkt werden. Formgebende Nachbearbeitungen sind nicht mehr unbedingt erforderlich.

Die erfindungsgemäße Ausrichtung des Fräsers bedeutet, daß die Kontaktlinie, auf der der Fräser die Saugseite berührt, einer geraden Linie aus der Schar entspricht, die das gewünschte Turbinenschaufelprofil im Bereich der Stelle, an der der Fräser es berührt, approximiert. Diese Approximation ist perfekt, wenn das herzustellende Turbinenschaufelprofil tatsächlich aus einer Schar gerader Linien gebildet ist; sie bleibt immer noch besonders günstig, wenn dies nicht der Fall und die Approximation dementsprechend nur unvollkommen ist, da die Abweichungen von der vorgegebenen Form des Turbinenschaufelprofils, die das Verfahren dann verursacht, besonders klein gehalten werden.

Zum Erzielen eines besonders breiten glatten Bereichs in der von dem Fräser auf dem Werkstück erzeugten Fräsbahn ist es vorteilhaft, den Fräser so zu Positionieren, daß die Kontaktlinie eine vollständig innerhalb der Stirnfläche liegende, zwei Punkte eines äußeren Randes der Stirnfläche miteinander verbindende Sehne ist. Der glatte Bereich der Fräsbahn, der durch diese Kontaktlinie definiert ist, wird auf diese Weise besonders groß. Besonders vorteilhaft ist es, wenn die Kontaktlinie etwa tangential zu einem inneren Rand der Stirnfläche verläuft, das heißt wenn sie den inneren Rand der Stirnfläche nahezu erreicht. Der äußere Rand der Stirnfläche ist bestimmt durch die von der Drehachse des Fräsers abgewandten Enden der Schneidkanten; der innere Rand der Stirnfläche ergibt sich aus den der Drehachse zugewandten Enden der Schneidkanten. Dementsprechend hängt die Art und Weise der Anordnung des Fräsers zum Fräsen der Saugseite wesentlich ab von der Geometrie des verwendeten Fräsers. Auf die Anzahl der Schneidkanten, die der Fräser auf der Stirnfläche hat, kommt es dabei nur unwesentlich an; die Auswahl des Fräsers kann unter Berücksichtigung der vorstehenden Bemerkungen im Rahmen des fachmännischen Ermessens erfolgen.

Viele Turbinenschaufelprofile weisen zwischen der eigentlichen Saugseite und der eigentlichen Druckseite Übergangszonen, insbesondere im vorderen und im hinteren Bereich, auf, welche ihrerseits konvex sind. Günstigerweise werden diese Übergangszonen zusammen mit der Saugseite im Rahmen des vorstehend beschriebenen Verfahrens gefräst.

Besonders vorteilhaft ist das Verfahren für die Herstellung eines Turbinenschaufelprofils, bei dem die Saugseite aus einer Schar gerader Linien gebildet ist, deren jede in spitzem Winkel zur Hauptachse ausgerichtet ist, und bei dem die Kontaktlinie stets auf einer dieser geraden Linien liegt. Beim Fräsen des Turbinenschaufelprofils muß die Stirnfläche des Fräsers auf der Kontaktlinie möglichst gut übereinstimmen mit dem Turbinenschaufelprofil; dies wird bei einem aus einer Schar gerader Linien gebildeten Turbinenschaufelprofil in besonders vorteilhafter Weise dadurch realisiert, daß die Kontaktlinie stets auf einer dieser geraden Linien liegt. Da das Turbinenschaufelprofil auf der herzustellenden Saugseite konvex ist, bedeutet dies, daß die Stirnfläche einwandfrei tangential zu der herzustellenden Saugseite ausgerichtet ist. Das Verbleiben wesentlicher Überstände wird damit besonders gering gehalten.

Besonders eignet sich das Verfahren zur Herstellung der Saugseite einer Trommelschaufel, bei der alle geraden Linien parallel zur Hauptachse ausgerichtet sind. Dabei werden nämlich Überstände ganz vermieden, eine eventuelle Nachbearbeitung braucht lediglich noch die Verringerung der Oberflächenrauhigkeit zum Ziel zu haben.

Im Hinblick auf die Herstellung der Druckseite des Turbinenschaufelprofils wird zur Lösung der Aufgabe ein Verfahren zum Fräsen eines entlang einer Hauptachse gestreckten Turbinenschaufelprofils mit einer konvexen Saugseite und einer konkaven Druckseite aus einem Werkstück angegeben, wobei die Druckseite gefräst wird mittels eines zugehörigen Fräsers, der um eine zugehörige Drehachse rotiert, welche eine Ebene senkrecht zur Hauptachse in einem spitzen Winkel schneidet, wobei das Werkstück und der Fräser in spitzem Winkel zu der Hauptachse relativ zueinander bewegt werden.

Das Verfahren zum Fräsen der Druckseite beruht darauf, daß die Drehachse des eingesetzten Fräsers derart zu dem herzustellenden Turbinenschaufelprofil geneigt ist, daß eine Fräsbahn mit elliptischem Querschnitt erzeugt wird. Die konkave Druckseite kann damit auf alle Fälle in sehr guter Näherung gefräst werden, so daß in Anbetracht der Tatsache, daß das Verbleiben gewisser Überstände unvermeidlich ist, formgebende Nachbearbeitungen nur in geringem Umfang erforderlich sind. Ein weiterer Vorteil gegenüber bekannten Fräsverfahren für die Druckseite, insbesondere Walzenfräsverfahren, liegt darin, daß ein Fräser verwendet werden kann, der entlang der Drehachse relativ kurz ist und somit in geringem Abstand zu der herzustellenden Druckseite eingespannt und gelagert werden kann; derart ergibt sich eine relativ starre und kaum zu Schwingungen neigende Anordnung, die eine hohe Qualität der Oberfläche der Druckseite, wie sie im Rahmen des Verfahrens erreicht werden kann, sichert.

Das Verfahren zum Fräsen der Druckseite ist auch in besonderer Weise geeignet zur Kombination mit dem weiter oben beschriebenen Verfahren zum Fräsen der Saugseite; im Rahmen dieser Kombination ist es nämlich möglich, das Turbinenschaufelprofil im Rahmen einer einzigen Aufspannung des Werkstücks vollständig zu fräsen. Erforderlich ist zwar ein Antrieb für den Fräser bzw. die Fräser, falls für die Saugseite und die Druckseite verschiedene Fräser zum Einsatz kommen, der schwenkbar ist, was allerdings mit üblichen Fräsmaschinen problemlos möglich ist. Immerhin erlaubt die Bereitstellung einer Fräsmaschine, die solches erlaubt, den Verzicht auf eine weitere Maschine zur formgebenden Bearbeitung eines mit nennenswerten Überstanden gefrästen Turbinenschaufelprofils, was wirtschaftlich besonders günstig sein kann.

Vorteilhafterweise wird zum Fräsen der Druckseite ein Fräser eingesetzt, welcher einen Radius hat, der kleiner ist als ein minimaler Krümmungsradius der Druckseite. Da zum Fräsen der Druckseite der Fräser mit einer geneigten Drehachse aufgesetzt wird, bildet er eine Fräsbahn mit elliptischem Querschnitt, die bereichsweise größere Krümmungsradien aufweist als der Fräser. Derart ist es möglich, die Gestalt der Druckseite anzunähern mit einander teilweise überlappenden elliptischen Fräsbahnen und somit die Überstände klein zu halten.

Mit besonderem Vorteil wird mit dem Fräser auf der Druckseite eine Fräsbahn erzeugt, welche die Druckseite auf einer Kontaktlinie berührt und welche auf der Kontaktlinie einen Krümmungsradius hat, der im wesentlichen gleich dem Krümmungsradius der Druckseite auf der Kontaktlinie ist. Auf diese Weise stimmen die das Profil bzw. die Fräsbahn beschreibenden Kurven nicht nur bezüglich des Ortes, sondern auch bezüglich der ersten Ableitung und bezüglich der zweiten Ableitung miteinander überein; derart wird eine besonders gute Annäherung an die herzustellende Druckseite erreicht.

Unbeschadet anderweitiger Ausbildung des Verfahrens wird die gesamte Druckseite vorteilhafterweise gefräst, indem mit dem Fräser mehrere Fräsbahnen erzeugt werden, welche einander teilweise überlappen. Insbesondere im Rahmen der vorstehenden Ausgestaltung sind dabei keineswegs besonders viele Fräsbahnen erforderlich, sondern es genügt eine Anzahl von höchstens vier. Dies gilt insbesondere für den Fall, daß die Druckseite einen im wesentlichen gleichbleibenden Krümmungsradius hat, beispielsweise im wesentlichen kreiszylindrisch ist.

Auch das Verfahren zum Fräsen der Druckseite ist besonders geeignet zum Fräsen eines Turbinenschaufelprofils, dessen Druckseite aus einer Schar gerader Linien gebildet ist, deren jede in spitzem Winkel zu der Hauptachse ausgerichtet ist, und wobei der Fräser stets entlang einer der geraden Linien bewegt wird. Der dabei erreichte Vorteil entspricht dem Vorteil, der bei dem oben beschriebenen Fräsen der Saugseite eines aus einer Schar gerader Linien gebildeten Turbinenschaufelprofils erreicht wird. Es wird nämlich erreicht, daß die Fräsbahn entlang der Kontaktlinie mit dem herzustellenden Turbinenschaufelprofil vollständig übereinstimmt, was zur Vermeidung größerer Überstände von besonderer Bedeutung ist.

Auch das Verfahren zum Fräsen einer Druckseite wird mit besonderem Vorteil angewandt zum Fräsen einer aus einer Schar gerader Linien gebildeten Druckseite, wobei alle geraden Linien parallel zur Hauptachse ausgerichtet sind, so daß die Druckseite entlang der Hauptachse gerade ist. Der besondere Vorteil dabei liegt darin, daß eine Übereinstimmung der Fräsbahn mit der Druckseite nicht nur dadurch gegeben ist, daß die Kontaktlinie jeder Fräsbahn auf der herzustellenden Druckseite liegt, sondern daß auch die Krümmung der Fräsbahn entlang jeder dieser Kontaktlinien mit der Krümmung der herzustellenden Druckseite übereinstimmt. Die anfallenden Überstände sind daher besonders gering, und das Verfahren ist besonders wirtschaftlich, dies nicht nur für sich allein betrachtet, sondern auch im Hinblick auf die selbstverständlich nach wie vor notwendige Nachbearbeitung.

Zur Herstellung eines geraden Turbinenschaufelprofils sei nachgetragen, daß sich sowohl beim Fräsen der Saugseite als auch beim Fräsen der Druckseite eine Vereinfachung dadurch ergibt, daß es kein Verkippen des Werkstücks, aus dem das Turbinenschaufelprofil herausgearbeitet werden soll, relativ zu der Hauptachse geben muß. Es sind nur Rotationen des Fräsers relativ zum Werkstück um die Hauptachse erforderlich;
Relativbewegungen zwischen dem Werkstück und dem Fräser senkrecht zur Hauptachse müssen nur Translationen sein.

Ausführungsbeispiele der Erfindung werden anhand der Zeichnung näher erläutert. Zur Herausstellung gewisser Merkmale ist die Zeichnung teilweise schematisch und/oder verzerrt ausgeführt. Im einzelnen zeigen:
Figur 1 einen Querschnitt durch einen Rohling senkrecht zur Hauptachse nebst Darstellung, wie ein Fräser zum Fräsen der Saugseite anzusetzen ist;
Figur 2 und Figur 3 den Fräsvorgang beim Fräsen der Saugseite zu verschiedenen Zeitpunkten;
Figur 4 eine Ansicht eines fertigen Turbinenschaufelprofils;
Figur 5 einen Querschnitt durch dasselbe Profil;
Figur 6 eine Skizze zur Verdeutlichung bestimmter Merkmale beim Fräsen der Saugseite;
Figur 7 eine andere Ansicht der Konfiguration gemäß Figur 6;
Figur 8 eine Ansicht einer Turbinenschaufel mit Fräser, der positioniert ist zum Fräsen der Druckseite;
Figur 9 einen Querschnitt durch die Anordnung gemäß Figur 8; und
Figur 10 eine Skizze zur Darstellung, wie die Druckseite mit mehreren Fräsbahnen zu fräsen ist.

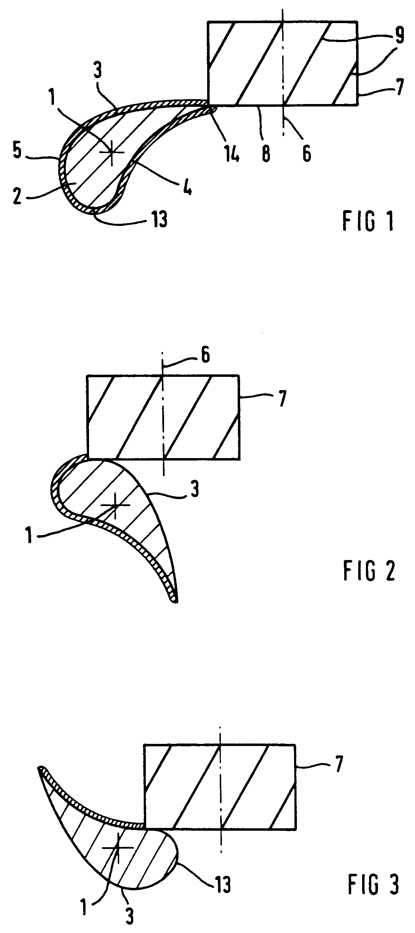

Die Figuren 1, 2 und 3 zeigen verschiedene Stadien beim Fräsen der Saugseite 3 eines geraden Turbinenschaufelprofils 2, wobei das Turbinenschaufelprofil 2 um die (als Kreuz dargestellte) Hauptachse 1 gedreht und relativ zu dem Fräser 7 bewegt wird. Das eigentliche und letztlich herzustellende Turbinenschaufelprofil 2 ist umgeben von einem gewissen Überstand, der zusammen mit dem Turbinenschaufelprofil 2 das Werkstück 5 bildet. Der Überstand ist der Einfachheit halber dargestellt als Schicht konstanter Dicke; auf seine Form kommt es für die Durchführung des Verfahrens allerdings allenfalls untergeordnet an. Das Turbinenschaufelprofil 2 hat eine konvexe Saugseite 3 und eine dieser gegenüberliegende konkave Druckseite 4; die Benennung von Saugseite 3 und Druckseite 4 erklärt sich aus der Tatsache, daß sich beim Betrieb an dem Turbinenschaufelprofil 2 zwischen der Saugseite 3 und der Druckseite 4 ein Druckgefälle ausbildet, wobei der höhere Druck auf der Druckseite 4 liegt. Zwischen der Saugseite 3 und der Druckseite 4 liegen Übergangszonen 13 und 14, wobei die Übergangszone 13 ein Schaufelvorderteil, welches im Betrieb von einem Arbeitsmittel angeströmt wird, und die Übergangszone 14 ein Schaufelhinterteil, von dem im Betrieb das Arbeitsmittel abströmt, ist. Diese Übergangszonen 13 und 14 sind im allgemeinen konvex und werden daher vorzugsweise zusammen mit der Saugseite 3 gefräst. Dieses Fräsen erfolgt, indem ein zum Fräsen der Saugseite 3 ausgewählter und damit zugehöriger Fräser 7, der um eine zugehörige Drehachse 6 rotiert, über die Übergangszonen 13 und 14 und die Saugseite 3 geführt wird. Der Fräser hat sowohl auf der dem Turbinenschaufelprofil 2 zugewandten Stirnfläche 8 als auch auf mehr oder weniger senkrecht zu der Stirnfläche 8 orientierten Seitenflächen Schneidkanten 9, welche Material von dem Werkstück 5 abtragen und somit die Saugseite 3 an dem Werkstück 5 freilegen. Einzelheiten, wie der Fräser 7 auf das Werkstück 5 aufzusetzen ist, sind bereits allgemein erläutert worden und werden anhand anderer Figuren nochmals detailliert wiederholt. Gemäß den Figuren 1 bis 3 wird der Fräser 7 angesetzt am Schaufelhinterteil 14 und über die Saugseite 3 zum Schaufelvorderteil 13 geführt. Im dargestellten Fall hat das Schaufelvorderteil 13 ein etwa kreiszylindrisches Profil und kann daher ohne weiteres mit dem für die Saugseite 3 bestimmten Fräser 7 gefräst werden. Der Schaufelvorderteil 13 kann dabei im wesentlichen vollständig bis zum Übergang zur Druckseite 4 freigelegt werden.

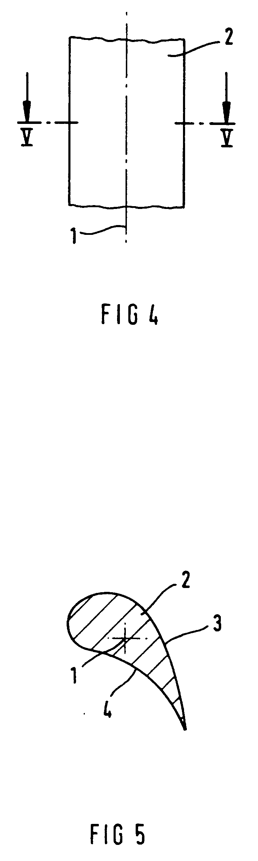

Figur 4 zeigt eine Ansicht eines fertigen Turbinenschaufelprofils 2 senkrecht zur Hauptachse 1; Figur 5 zeigt ein an der Linie V-V in Figur 4 durch das Schaufelprofil 2 gelegten Querschnitt. Deutlich erkennbar sind die Hauptachse 1 sowie die Saugseite 3 und die Druckseite 4.

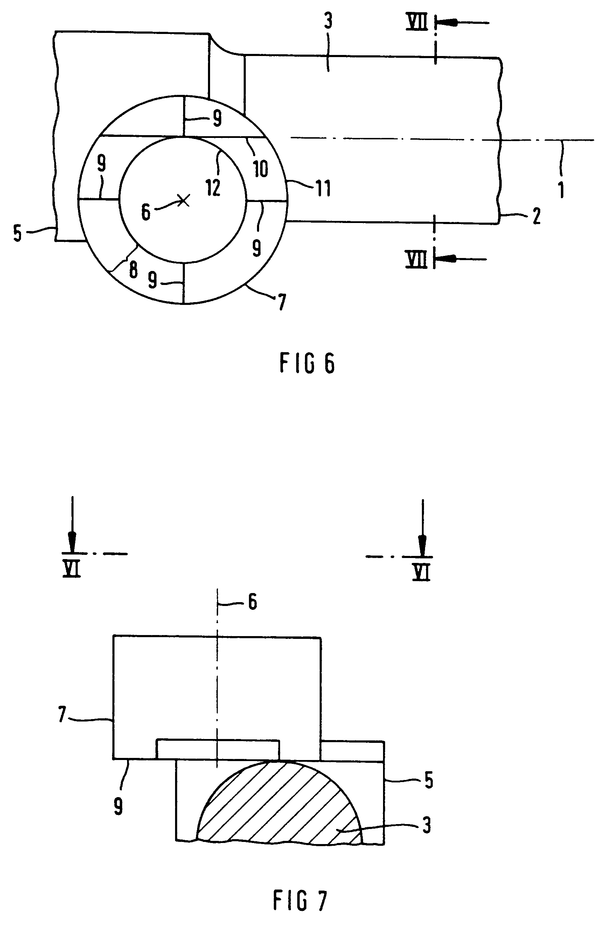

Die Geometrie des erfindungsgemäßen Fräsens der Saugseite 3 geht hervor aus den Figuren 6 und 7, wobei Figur 6 eine Ansicht einer Konfiguration aus Fräser 7 und Werkstück 5 senkrecht zur Hauptachse 1 darstellt und Figur 7 eine Ansicht derselben Anordnung parallel zur Hauptachse 1 ist, wie durch die Linie VII-VII in Figur 6 angedeutet. Der Zusammenhang zwischen den Figuren 6 und 7 ist auch in Figur 7 angedeutet durch die Linie VI-VI, welche die aus Figur 6 ersichtliche Ansicht der Anordnung wiedergibt. Gemäß den Figuren wird mittels eines zylindrischen und um die zugehörige Drehachse 6 rotierenden Fräsers 7 die Saugseite 3 des Schaufelprofils 2 aus dem Werkstück 5 herausgefräst. Die Formgebung erfolgt dabei im wesentlichen mit etwa senkrecht zur Drehachse 6 ausgerichteten Schneidkanten 9, von denen vier dargestellt sind. Durch die Rotation des Fräsers 7 definieren die Schneidkanten 9 eine kreisringförmige Stirnfläche 8 mit einem äußeren Rand 11 und einem inneren Rand 12. Der äußere Rand 11 ist dabei gegeben durch die von der Drehachse 6 abgewandten Enden der Schneidkanten 9, der innere Rand 12 durch die der Drehachse 6 zugewandten Enden der Schneidkanten 9. Zum Erhalt einer glatten Fläche ist die Stirnfläche 8 des Fräsers 7 bezüglich der herzustellenden Saugseite 3 so auszurichten, daß sie an einer Kontaktlinie 10 die Saugseite 3 tangential berührt. Auf diese Weise kann über die Breite der Kontaktlinie 10 vermieden werden, daß der Fräsprozeß auf der Saugseite 3 Überstände zurückläßt. Um dies zu vermeiden ist es auch von Bedeutung, daß die Kontaktlinie 10 vollständig innerhalb der Stirnfläche 8 verläuft und nicht vom inneren Rand 12 unterbrochen wird; in diesem Fall würde sich die mögliche Fräsbreite um die Hälfte verringern, da nur über jeweils durchgehende Stücke der Kontaktlinie 10 das gewünschte Ergebnis des Fräsens erzielt wird. Um die Kontaktlinie 10 möglichst breit zu machen, ist es vorteilhaft, sie derart zu legen, daß sie den inneren Rand 12 der Stirnfläche 8 etwa tangential berührt; dargestellt ist dies in Figur 6. Derart wird die Kontaktlinie 10 besonders breit, woraus sich unmittelbar eine besonders breite glatte Fräsbahn auf der Saugseite 3 ergibt. Da sich allerdings die Vorzüge des dargestellten Fräsverfahrens nicht auf der konvexen Druckseite 4 realisieren lassen, ist ohnehin ein Absetzen des Fräsers 7 nach einer vollständigen Überquerung der Saugseite 3 erforderlich, so daß es sich zum Erzielen möglichst breiter Fräsbahnen empfiehlt, den Fräser etwa senkrecht zur Hauptachse 1 über die Saugseite 3 zu führen. Abschließend sei bemerkt, daß der Deutlichkeit halber die Saugseite 3 in den Figuren 6 und 7 kreiszylindrisch dargestellt wurde; dies tut allerdings der Anwendbarkeit der erfindungsgemäßen Lehre auf eine komplizierter geformte Saugseite 3, wie sie insbesondere aus Figur 5 hervorgeht, keinen Abbruch.

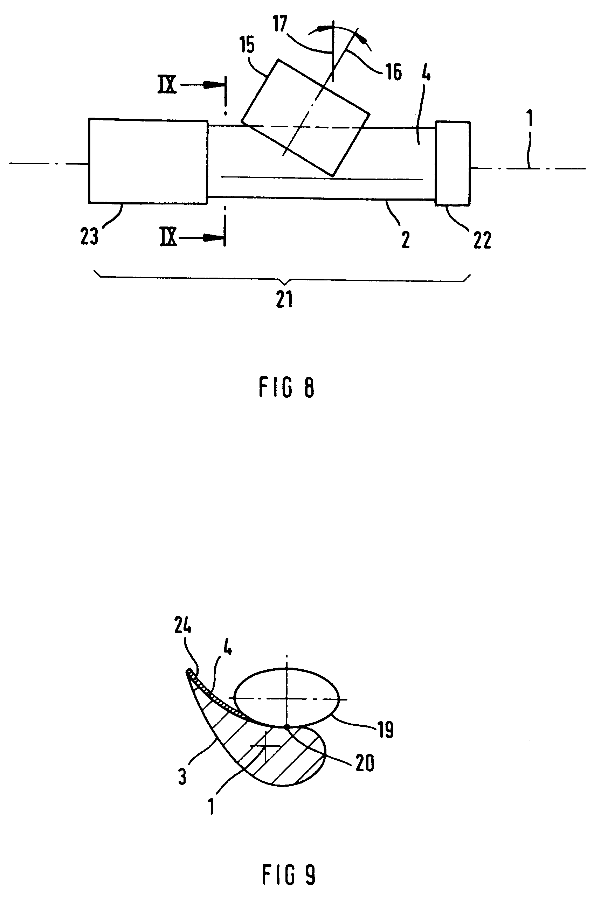

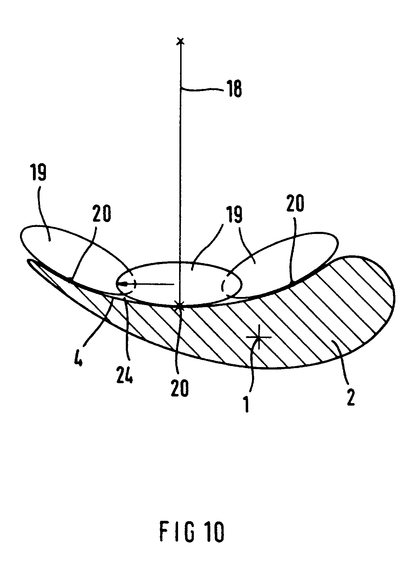

Aus den Figuren 8, 9 und 10 ist das erfindungsgemäße Fräsen der konkaven Druckseite 4 des Turbinenschaufelprofils 2 ersichtlich. Figur 8 zeigt eine Ansicht der Konfiguration aus dem Turbinenschaufelprofil 2 und dem zum Fräsen der Druckseite 4 eingesetzten Fräser 15 senkrecht zur Hauptachse 1, Figur 9 einen Schnitt durch das aus Figur 8 ersichtliche Turbinenschaufelprofil 2 senkrecht zur Hauptachse 1, wie angedeutet durch die Linie IX-IX in Figur 8, und Figur 10 ein Turbinenschaufelprofil 2, auf dessen Druckseite 4 mehrere Fräsbahnen 19 angedeutet sind. Zunächst wird auf die Figuren 8 und 9 Bezug genommen. Figur 8 zeigt nicht nur das Turbinenschaufelprofil 2, sondern deutet die gesamte Turbinenschaufel 21 nebst Kopfteil 22 und Fußteil 23 an. Aus Figur 8 wird auch deutlich, daß das Turbinenschaufelprofil 2 bezüglich der Hauptachse 1 gerade ist. Zum Fräsen der Druckseite 4 ist der um die Drehachse 16 rotierende Fräser 15, der senkrecht zur Drehachse 16 einen deutlich geringeren Radius hat als der aus Figur 9 erkennbare Krümmungsradius der Druckseite 4, so angeordnet, daß die Drehachse 16 mit einer senkrecht zur Hauptachse 1 verlaufenden Ebene 17 (in Figur 8 als Linie angedeutet) einen spitzen Winkel bildet, und wird etwa entlang der Hauptachse 1 über die fräsende Druckseite 4 geführt. Auf diese Weise erzeugt er Fräsbahnen 19, die senkrecht zur Hauptachse 1 elliptische Querschnitte haben, wobei die großen Halbachsen der diese Querschnitte beschreibenden Ellipsen etwa parallel zur Druckseite 4 entlang der Kontaktlinie 20, auf der die Fräsbahnen 19 mit der Druckseite 4 zusammenfallen, sind. Darüber hinaus ist vorteilhafterweise der Radius des Fräsers 15 sowie der Winkel zwischen seiner Drehachse 16 und der Ebene 17 so gewählt, daß der Krümmungsradius der elliptischen Fräsbahn 19 auf der Kontaktlinie 20 übereinstimmt mit dem Krümmungsradius der Druckseite 4 auf der Kontaktlinie 20. Derart wird erreicht, daß die verbleibenden Überstände 24 minimal sind, außerdem kann die gesamte Druckseite 4 mit relativ wenigen Fräsbahnen 19 vollständig erfaßt werden. Einzelheiten hierzu ergeben sich aus der Figur 10, welche ebenfalls ein Querschnitt durch ein Turbinenschaufelprofil 2 senkrecht zur Hauptachse 1 ist. Die Druckseite 4 ist im dargestellten Fall kreiszylindrisch, so daß in jedem Punkt der Druckseite 4 der zugehörige Krümmungsradius gleich einem einzigen Wert, nämlich dem Radius 18 der Druckseite 4, der damit deren minimalem Krümmungsradius entspricht, ist. Wie in Figur 10 angedeutet, ist die Druckseite 4 weitgehend vollständig zu fräsen, indem drei Fräsbahnen 19, angedeutet durch Ellipsen, die einander teilweise überlappen, über die Druckseite 4 gelegt werden. Wie bereits erwähnt, muß jede Fräsbahn 19 auf der Kontaktlinie 20, auf der sie mit der Druckseite 4 übereinstimmt, denselben Krümmungsradius haben wie die Druckseite 4 selbst (Figur 10 ist in diesem Punkt als schematische Darstellung zu betrachten, für die nicht geltend gemacht wird, daß diese Forderung realisiert sei). Die auf der Druckseite 4 zwischen den Fräsbahnen 19 verbleibenden Überstände 24 sind in der Tat sehr gering, tatsächlich ist es möglich, durch geeignete Bemessung des Fräsers 15 und der Zahl der Fräsbahnen 19, welche gleichwohl recht gering bleiben kann, Überstände 24 zu erzielen, die sich mit einfachen und in der Regel ohnehin zur Endbearbeitung notwendigen Schleif- oder Läppverfahren beseitigen lassen.

Der Einfachheit und Übersicht halber ist die Erfindung anhand der Zeichnung erläutert worden für die Herstellung eines entlang der Hauptachse geraden Turbinenschaufelprofils, also eines Turbinenschaufelprofils für eine Trommelschaufel. Mit dieser Erläuterung ist selbstverständlich keinerlei Einschränkung des Schutzbegehrens, das sich selbstverständlich auch auf andere Turbinenschaufelprofile bezieht, verbunden. Insbesondere im Hinblick auf Turbinenschaufelprofile, die aus Scharen gerader Linien bestehen, ist eine Modifikation der gegebenen Erläuterung nicht erforderlich, es ist lediglich festzuhalten, daß die Kontaktlinie, die die Anordnung der Stirnfläche des Fräsers auf der Saugseite bzw. der Fräsbahn auf der Druckseite des herzustellenden Turbinenschaufelprofils beschreibt, mit einer der geraden Linien, die das Turbinenschaufelprofil bilden, zusammenfallen sollte. Fur andere Turbinenschaufelprofile sei nochmals auf die weiter oben gemachten Ausführungen zur Approximation jedweden Turbinenschaufelprofils mit Flächen, die gebildet sind aus geraden Linien, verwiesen.

Insgesamt ermöglicht die Erfindung ein besonders rationelles Fräsen von Turbinenschaufelprofilen; die Erfindung ist insbesondere geeignet zur Realisierung auf vier- oder fünfachsigen, numerisch gesteuerten Fräsmaschinen.

## Patentansprüche

1. Verfahren zum Fräsen eines entlang einer Hauptachse (1) gestreckten Turbinenschaufelprofils (2) mit einer konvexen Saugseite (3) und einer konkaven Druckseite (4) aus einem Werkstück (5), wobei die Saugseite (3) mittels eines um eine zugehörige Drehachse (6) rotierenden zugehörigen Fräsers (7) gefräst wird, welcher Fräser (7) eine kreisringförmige, ebene Stirnfläche (8) hat, die definiert ist durch eine rotierende Anordnung mit zumindest einer Schneidkante (9), wobei der Fräser (7) und das Werkstuck (5) etwa senkrecht zur Hauptachse (1) gegeneinander bewegt werden,
**dadurch gekennzeichnet,** daß die Schneidkante (9) in der Stirnfläche (8) liegt sowie die Stirnfläche (8) tangential zu der zu fräsenden Saugseite (3) ausgerichtet ist und die Saugseite (3) an einer in spitzem Winkel zu der Hauptachse (1) ausgerichteten Kontaktlinie (10) berührt.

2. Verfahren nach Anspruch 1, wobei die Stirnfläche (8) einen äußeren Rand (11) und einen inneren Rand (12) aufweist und wobei die Kontaktlinie (10) eine zwischen zwei Punkten des äußeren Randes (11) gezogene, vollständig innerhalb der Stirnfläche (8) liegende Sehne ist.

3. Verfahren nach Anspruch 2, bei dem die Kontaktlinie (10) etwa tangential zu dem inneren Rand (12) verläuft.

4. Verfahren nach einem der vorhergehenden Ansprüche, wobei das Turbinenschaufelprofil (2) zwischen der Saugseite (3) und der Druckseite (4) konvexe Übergangszonen (13, 14) aufweist, welche zusammen mit der Saugseite (3) gefräst werden.

5. Verfahren nach einem der vorhergehenden Ansprüche, bei dem die Saugseite (3) aus einer Schar gerader Linien gebildet ist, deren jede in spitzem Winkel zur Hauptachse (1) ausgerichtet ist, und bei dem die Kontaktlinie (10) stets auf einer der geraden Linien liegt.

6. Verfahren nach Anspruch 5, bei dem alle geraden Linien parallel zur Hauptachse (1) ausgerichtet sind.

7. Verfahren zum Fräsen eines entlang einer Hauptachse (1) gestreckten Turbinenschaufelprofils (2) mit einer konvexen Saugseite (3) und einer konkaven Druckseite (4) aus einem Werkstück (5), insbesondere nach einem der vorhergehenden Ansprüche, bei dem die Druckseite (4) gefräst wird mittels eines zugehörigen Fräsers (15), der um eine zugehörige Drehachse (16) rotiert, dadurch gekennzeichnet, daß die Drehachse (16) eine Ebene (17) senkrecht zur Hauptachse (1) in einem spitzen Winkel schneidet sowie das Werkstück (5) und der Fräser (15) in spitzem Winkel zu der Hauptachse (1) relativ zueinander bewegt werden.

8. Verfahren nach Anspruch 7, bei dem die Druckseite (4) einen minimalen Krümmungsradius (18) hat und der Radius des Fräsers (15) zum Fräsen der Druckseite (4) kleiner als der minimale Krümmungsradius (18) ist.

9. Verfahren nach Anspruch 8, bei dem mit dem Fräser (15) auf der Druckseite (4) eine Fräsbahn (19) erzeugt wird, welche die Druckseite (4) auf einer Kontaktlinie (20) berührt und welche auf der Kontaktlinie (20) einen Krümmungsradius hat, der im wesentlichen gleich dem Krümmungsradius (18) der Druckseite (4) auf der Kontaktlinie (20) ist.

10. Verfahren nach einem der Ansprüche 7 bis 9, bei dem die Druckseite (4) gefräst wird, indem mit dem Fräser (15) mehrere Fräsbahnen (19), insbesondere höchstens fünf Fräsbahnen (19), erzeugt werden, welche einander teilweise überlappen.

11. Verfahren nach einem der Ansprüche 7 bis 10, bei dem die Druckseite (4) aus einer Schar gerader Linien gebildet ist, deren jede in spitzem Winkel zu der Hauptachse (1) ausgerichtet ist, und bei dem der Fräser (15) stets entlang einer der geraden Linien bewegt wird.

12. Verfahren nach Anspruch 11, bei dem alle geraden Linien parallel zur Hauptachse (1) ausgerichtet sind.

## Claims

1. Process for milling a turbine-blade profile (2), prolate along a main axis (1) and having a convex suction side (3) and a concave pressure side (4), from a workpiece (5), the suction side (3) being milled by means of an associated milling cutter (7) rotating about an associated axis of rotation (6), which milling cutter (7) has an annular plane end face (8) which is defined by a rotating arrangement with at least one cutting edge (9), the milling cutter (7) and the workpiece (5) being moved relative to one another approximately perpendicularly to the main axis (1), characterized in that the cutting edge (9) is located in the end face (8), and the end face (8) is oriented tangentially to the suction side (3) to be milled and touches the suction side (3) at a contact line (10) oriented at an acute angle to the main axis (1).

2. Process according to Claim 1, in which the end face (8) has an outer edge (11) and an inner edge (12), and wherein the contact line (10) is a chord drawn between two points of the outer edge (11) and lying completely within the end face (8).

3. Process according to Claim 2, in which the contact line (10) runs approximately tangentially to the inner edge (12).

4. Process according to one of the preceding claims, in which the turbine-blade profile (2) has, between the suction side (3) and the pressure side (4), convex transitional zones (13, 14) which are milled together with the suction side (3).

5. Process according to one of the preceding claims, in which the suction side (3) is formed from a set of straight lines, each of which is oriented at an acute angle to the main axis (1), and wherein the contact line (10) always lies on one of the straight lines.

6. Process according to Claim 5, in which all the straight lines are oriented parallel to the main axis (1).

7. Process for milling a turbine-blade profile (2), prolate along a main axis (1) and having a convex suction side (3) and a concave pressure side (4), from a workpiece (5), especially according to one of the preceding claims, in which the pressure side (4) is milled by means of an associated milling cutter (15) rotating about an associated axis of rotation (16), characterized in that the axis of rotation (16) intersects a plane (17) perpendicular to the main axis (1) at an acute angle, and the workpiece (5) and the milling cutter (15) are moved relative to one another at an acute angle to the main axis (1).

8. Process according to Claim 7, in which the pressure side (4) has a minimum radius of curvature (18) and the radius of the milling cutter (15) for milling the pressure side (4) is smaller than the minimum radius of curvature (18).

9. Process according to Claim 8, in which the milling cutter (15) generates on the pressure side (4) a milling track (19) which touches the pressure side (4) on a contact line (20) and which has, on the contact line (20), a radius of curvature which is essentially equal to the radius of curvature (18) of the pressure side (4) on the contact line (20).

10. Process according to one of Claims 7 to 9, in which the pressure side (4) is milled, in that the milling cutter (15) generates a plurality of milling tracks (19), and especially at most five milling tracks (19), which partially overlap one another.

11. Process according to one of Claims 7 to 10, in which the pressure side (4) is formed from a set of straight lines, each of which is oriented at an acute angle to the main axis (1), and wherein the milling cutter (15) is always moved along one of the straight lines.

12. Process according to Claim 11, in which all the straight lines are oriented parallel to the main axis (1).

## Revendications

1. Procédé de fraisage d'un profil (2) d'aube de turbine s'étendant le long d'un axe (1) principal, comportant un côté (3) d'aspiration convexe et un côté (4) refoulement concave, à partir d'une pièce (5) à usiner, le côté (3) d'aspiration étant fraisé au moyen d'une fraise (7) associée qui tourne par rapport à un axe (6) de rotation associé et qui a une face (8) frontale annulaire circulaire plane, qui est définie par une disposition tournante comportant au moins une arête (9) coupante, la fraise (7) et la pièce (5) à usiner étant déplacées l'une vers l'autre à peu prés perpendiculairement à l'axe (1) principal,
caractérisé en ce que l'arête (9) coupante se trouve dans la face (8) frontale et en ce que la face (8) frontale est dirigée de manière tangente au côté (3) d'aspiration à fraiser et en ce que le côté (3) d'aspiration touche une ligne (10) de contact faisant un angle aigu avec l'axe (1) principal.

2. Procédé suivant la revendication 1, la face (8) frontale comportant un bord (11) extérieur et un bord (12) intérieur et la ligne (10) de contact étant une corde se trouvant totalement à l'intérieur de la face (8) frontale, reliant l'un à l'autre deux points du bord (11) extérieur.

3. Procédé suivant la revendication 2, dans lequel la ligne (10) de contact s'étend de manière à peu près tangente au bord (12) intérieur.

4. Procédé suivant l'une des revendications précédentes, dans lequel le profil (2) d'aube de turbine comporte entre le côté (3) d'aspiration et le côté (4) de refoulement des zones (13, 14) de transition convexes, qui sont fraisées conjointement avec le côté (3) d'aspiration.

5. Procédé suivant l'une des revendications précédentes, dans lequel le côté (3) d'aspiration est formé par une famille de lignes droites dont chacune est dirigée en faisant angle aigu avec l'axe (1) principal et dans lequel la ligne (10) de contact se trouve toujours sur l'une des lignes droites.

6. Procédé suivant la revendication 5, dans lequel toutes les lignes droites sont dirigées parallèlement à l'axe (1) principal.

7. Procédé de fraisage d'un profil (2) d'aube de turbine s'étendant le long d'un axe (1) principal, comportant un côté (3) d'aspiration convexe et un côté (4) de refoulement concave, à partir d'une pièce (5) à usiner, notamment suivant l'une des revendications précédentes, dans lequel on fraise le côté (4) de refoulement au moyen d'une fraise (15) associée, qui tourne par rapport à un axe (16) de rotation associé, caractérisé en ce que l'axe (16) de rotation coupe un plan (17) perpendiculaire à l'axe (1) principal en faisant un angle aigu avec ce plan, et en ce que la pièce (5) à usiner et la fraise (15) faisant un angle aigu sont déplacées l'une par rapport à l'autre vers l'axe (1) principal.

8. Procédé suivant la revendication 7, dans lequel le côté (4) de refoulement a un rayon (18) de courbure minimum et dans lequel le rayon de la fraise (15) servant à fraiser le côté (4) de refoulement est inférieur au rayon (18) de courbure minimum.

9. Procédé suivant la revendication 8, dans lequel on produit par la fraise (15), sur le côté (4) de refoulement, une voie (19) de fraisage qui touche le côté (4) de refoulement sur une ligne (20) de contact et qui a sur la ligne (20) de contact un rayon de courbure qui est sensiblement égal au rayon (18) de courbure minimum du côté (4) de refoulement sur la ligne (20) de contact.

10. Procédé suivant l'une des revendications 7 à 9, dans lequel on fraise le côté (4) de refoulement en produisant par la fraise (15) plusieurs voies (19) de fraisage, notamment au plus cinq voies (19) de fraisage, qui se chevauchent partiellement l'une l'autre.

11. Procédé suivant l'une des revendications 7 à 10, dans lequel le côté (4) de refoulement est formé par une famille de lignes droites, qui chacune font un angle aigu avec l'axe (1) principal, et dans lequel la fraise (15) se déplace toujours le long de l'une des lignes droites.

12. Procédé suivant la revendication 11, dans lequel toutes les lignes droites sont parallèles à l'axe (1) principal.
